# EUROPÄISCHE PATENTSCHRIFT

(11) **EP 3 070 780 B1**
(45) Veröffentlichungstag und Bekanntmachung des Hinweises auf die Patenterteilung: **27.09.2017**
(21) Anmeldenummer: 15159197.1
(22) Anmeldetag: 16.03.2015
(51) Int. Cl.: H01M 10/6556

(54) **BATTERIEKÜHLKÖRPER**
BATTERY COOLING BODY
DISSIPATEUR DE CHALEUR POUR BATTERIE

(43) Veröffentlichungstag der Anmeldung: 21.09.2016
(73) Patentinhaber: Samsung SDI Co., Ltd., Yongin-si, Gyeonggi-do (KR)
(72) Erfinder: Eichberger, Georg, 8044 Graz (AT)
(74) Vertreter: Gulde & Partner

(56) Entgegenhaltungen:
- WO-A1-2012/156363
- DE-A1-102011 003 535
- JP-A- 2009 301 877

## Beschreibung

### Gebiet der Erfindung

Die vorliegende Erfindung betrifft einen Batteriekühlkörper, zur Kühlung von Batteriezellen einer Fahrzeugbatterie, wobei der Batteriekühlköper plattenförmig ist und ein Batteriesystem umfassend Batteriezellen und einen solchen Batteriekühlkörper.

### Stand der Technik

Plattenförmige Batteriekühlkörper sind hinlänglich bekannt. Solche Kühlkörper werden insbesondere in Batteriesystemen mit einer größeren Anzahl von Batteriezellen, wie zum Beispiel einer Antriebsbatterie für ein Kraftfahrzeug, verwendet, um die im Betrieb der Batterie entstehende Wärme von den Batteriezellen abzuführen. Die Batteriezellen sind dazu gut wärmeleitend mit einer Oberfläche des Kühlkörpers verbunden, so dass die Wärme der Zellen auf den Kühlkörper übertragen wird. Im Batteriekühlkörper können Kanäle ausgebildet sein, die von einem Fluid wie zum Beispiel Wasser durchströmt sein können, so dass die Wärme mittels des Fluids von der Kühlplatte weg transportiert werden kann.

Um die Bildung von Kondenswasser an der Außenseite eines solchen Batteriekühlkörpers zu vermeiden ist es bekannt, eine Wärmedämmung an der Außenseite, also der den Batteriezellen abgewandten Seite des Kühlkörpers vorzusehen, insbesondere durch Anordnung von Dämmmatten.

Außerhalb der Wärmedämmung kann ein mechanischer Schutz des Kühlkörpers bzw. des gesamten Batteriesystems gegen das Eindringen von Fremdkörpern vorgesehen sein, beispielsweise ein Unterbodenfahrschutz eines Kraftfahrzeuges.

Aus der WO 2012/156363 A1 ist eine wiederaufladbare Batterie bekannt, welche in Ihrem Bodenbereich ein Wärmeleitelement aufweist, welches mit einer Grundplatte verbunden ist. Ein herausragendes Ende des Wärmeleitelementes ist zumindest teilweise innerhalb der Grundplatte angeordnet. Zwischen den Batteriezellen und der Grundplatte kann ein mit isoliermaterial gefüllter Raum angeordnet sein.

Die DE 102011003535 A1 beschreibt eine Vorrichtung zum Verspannen eines elektrochemischen Energiespeichermoduls mit einem Kühler, der zumindest eine Wärmeübergangsfläche zum Übertragen von Wärmeenergie aufweist, und wobei das Energiespeichermodul zumindest eine Anlagefläche zum Anlegen der Wärmeübergangsfläche sowie zumindest zwei Modulträger aufweist, die an zwei einander gegenüberliegenden Seiten des Energiespeichermoduls angeordnet sind. Die Vorrichtung weist ein Spannblech mit zumindest zwei, an gegenüberliegenden Enden des Spannblechs angeordneten Verbindungselementen zum Verbinden des Spannblechs mit den Modulträgern auf, wobei das Spannblech ausgebildet ist, um den Kühler teilumfänglich zu umschließen und eine Verspannkraft auf zumindest Teilbereiche einer von der Wärmeübergangsfläche abgewandten Seite des Kühlers auszuüben, wenn das Spannblech mit den Modulträgern verbunden ist. Zwischen dem Spannblech und dem Kühler existiert ein Luftpolster.

Die JP 2009301877 A offenbart einen plattenförmigen Batteriekühlkörper mit innenliegenden Kanälen und einer Schutzfläche, welche von den Kanälen durch ein Luftpolster beabstandet ist.

### Zusammenfassung der Erfindung

Es ist eine Aufgabe der Erfindung, einen Batteriekühlkörper anzugeben, der eine verringerte Bildung von Kondenswasser ermöglicht und dabei einfach und kostengünstig herstellbar ist. Eine weitere Aufgabe der Erfindung ist es ein Batteriesystem anzugeben, umfassend einen solchen Batteriekühlkörper, das zu verringerter Bildung von Kondenswasser am Batteriekühlkörper neigt. Die Lösung der Aufgabe erfolgt durch eine Batteriekühlkörper, zur Kühlung von Batteriezellen einer Fahrzeugbatterie, wobei der Batteriekühlköper plattenförmig ist und innenliegende Kanäle zur Führung eines Kühlfluids aufweist, wobei die Kanäle gut wärmeleitend mit einer Kühlfläche des Batteriekühlkörpers in Verbindung stehen, wobei an der Kühlfläche im verbauten Zustand des Batteriekühlkörpers die Batteriezellen angeordnet werden können, wobei der Batteriekühlkörper eine Schutzfläche aufweist, wobei die Schutzfläche die der Kühlfläche gegenüberliegende Begrenzung des Batteriekühlkörpers bildet, wobei die Schutzfläche mit der Kühlfläche ausschließlich über Stege verbunden ist, wobei die Stege ausschließlich in Bereichen des Kühlkörpers ausgebildet sind in denen keine Kanäle ausgebildet sind und die Stege seitlich neben den Kanälen angeordnet und von den Kanälen durch das selbe Luftpolster beabstandet sind, welches die Kanäle auch von der Schutzfläche trennt,wobei die der Kühlfläche gegenüberliegenden Begrenzungen der Kanäle nicht eine Außenfläche des Batteriekühlkörpers bilden, sondern durch ein Luftpolster von einer äußeren Fläche des Batteriekühlkörpers, der Schutzfläche, getrennt sind und der Batteriekühlkörper mit seinen Komponenten Kanäle, Stege und Schutzfläche einstückig mit der Kühlfläche ausgebildet ist.

Erfindungsgemäß ist die Außenseite des Kühlkörpers, nämlich die Schutzfläche, lediglich durch Stege mit der gekühlten Oberfläche des Kühlkörpers verbunden, wobei die Stege selbst nur in Bereichen des Kühlkörpers ausgebildet sind in denen keine Kanäle ausgebildet sind. Somit ist die Außenseite bzw. Schutzfläche weder direkt noch über die Stege in Kontakt mit den Kanälen zum Transport des Kühlfluids. Durch diese geometrische Ausbildung des Kühlkörpers wird eine Luftbrücke zur Wärmeisolation zwischen den Kanälen und der Kühlfläche einerseits und der Schutzfläche andererseits gebildet und somit die Kühlleistung effizient zur Kühlung der Kühlfläche genutzt und die Bildung von Kondenswasser an der Schutzfläche verringert. Die Schutzfläche dient dabei gleichzeitig dem Schutz des Kühlkörpers bzw. eines Batteriesystems mit einem solchen Kühlkörper nach außen.

Ein erfindungsgemäßer Batteriekühlkörper kann deshalb zusätzlich zur Funktion der Kühlung auch die Funktionen der Wärmedämmung und des Schutzes, insbesondere eines Unterbodenfahrschutzes, in einem einzigen Bauteil erfüllen.

Dabei liegen die Stege seitlich neben den Kühlkanälen im Batteriekühlkörper und zwar von den Kühlkanälen beabstandet.

Die Kanäle sind zwischen Kühlfläche und Schutzfläche ausgebildet, wobei die Schutzfläche von den Kanälen beabstandet ist, insbesondere durch ein Luftpolster. Zwischen Schutzfläche und Kanälen könnte auch ein anderes Gas als Luft, ein Fluid oder ein Festkörper angeordnet sein, insbesondere ein Dämmmaterial.

Vorzugsweise weisen die Kanäle einen flachen Querschnitt auf, deren Länge sich unterhalb der Kühlfläche erstreckt, insbesondere einen ovalen oder rechteckigen Querschnitt, so dass die Kühlwirkung des Kühlfluids auf die Kühlfläche vergrößert wird, die Bauhöhe des Kühlkörpers aber gering sein kann.

Abschnitte der Begrenzungen der Kanäle werden von der Kühlfläche gebildet. Die Kanäle werden also teilweise durch die Kühlfläche selbst gebildet, so dass eine optimale Wärmeleitung zur Kühlfläche gegeben ist.

Die Kühlfläche ist bevorzugt dicker, also mit größerer Wandstärke, ausgebildet als Abschnitte der Begrenzungen der Kanäle die der Schutzfläche zugewandt sind. Dadurch wird die Wärmeleitung von den Kanälen zur Kühlfläche erhöht und zu einem Luftpolster bzw. zur Schutzfläche vermindert.

Bevorzugt sind in Abschnitten der Begrenzungen der Kanäle die von der Kühlfläche gebildet werden und/oder die der Kühlfläche zugewandt sind, ins Innere der Kanäle weisende Rippen ausgebildet.

Vorzugsweise ist der Batteriekühlkörper aus Aluminium und/oder als Strangpressprofil ausgebildet.

Erfindungsgemäß ist der Kühlkörper mit allen genannten Komponenten einstückig ausgebildet, insbesondere sind die Kanäle, die Stege, die Schutzfläche und gegebenenfalls Rippen einstückig mit der Kühlfläche ausgebildet, bevorzugt als Strangpressprofil.

Ein erfindungsgemäßes Batteriesystem umfasst Batteriezellen und einen Batteriekühlkörper wie oben beschrieben.

Die Batteriezellen sind an der von der Schutzfläche abgewandten Seite der Kühlfläche angeordnet.

Besonders bevorzugt sind die Batteriezellen lediglich in Bereichen des Kühlkörpers angeordnet, in welchen die Kanäle ausgebildet sind und nicht in Bereichen des Kühlkörpers, in welchen die Stege ausgebildet sind. Eine thermische Verbindung bzw. thermische Brücke zwischen der Kühlfläche und der Schutzfläche gibt es dadurch nur außerhalb des Bereiches der Batteriezellen, wodurch die Kühlleistung optimiert wird.

Vorzugsweise ist zur weiteren Optimierung der Kühlleistung an den Zellen zwischen den Batteriezellen und der Kühlfläche ein Material mit hohem Wärmeübergangskoeffizient angeordnet, insbesondere eine Matte oder eine Folie.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht eines erfindungsgemäßen Batteriekühlkörpers.
- Fig. 2: ist eine Ansicht die den Batteriekühlkörper gemäß Fig. 1 von vorne zeigt.
- Fig. 3: ist eine Ansicht eines erfindungsgemäßen Batteriesystems mit einem Batteriekühlkörper entsprechend Fig. 1 von vorne.
- Fig. 4: ist eine dreidimensionale Ansicht des erfindungsgemäßen Batteriesystems gemäß Fig. 3.

### Detaillierte Beschreibung der Erfindung

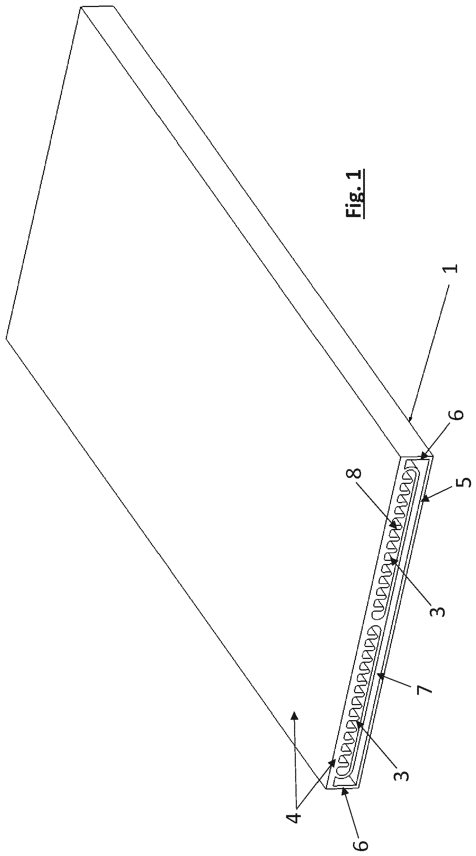

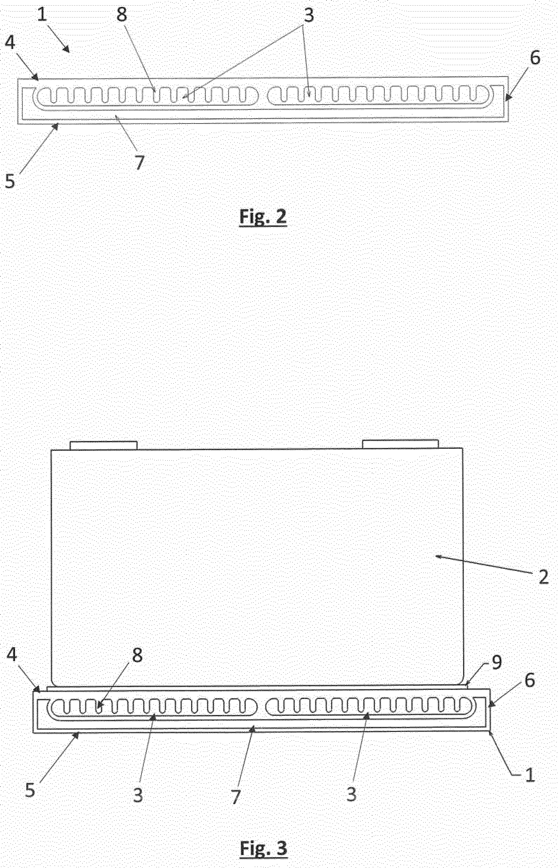

In Fig. 1 und 2 ist ein erfindungsgemäßer plattenförmiger Batteriekühlkörper 1 dargestellt, mit im Inneren des Kühlkörpers 1 liegenden Kanälen 3 zur Führung eines Kühlfluids. Der Kühlkörper 1 ist einstückig, als Aluminium-Strangpressprofil ausgebildet. Die Kanäle 3 erstrecken sich in einer länglichen, ovalen Form direkt unterhalb einer Kühlfläche 4 des Kühlkörpers 3. Die Kanäle 3 sind gut wärmeleitend mit der Kühlfläche 4 verbunden, da die Kanäle abschnittsweise direkt von der Kühlfläche 4 ausgebildet werden, die Kühlfläche 4 eine hohe Wandstärke aufweist und zusätzlich ins Innere der Kanäle 3 weisende Rippen 8 ausgebildet sind.

Die der Kühlfläche 4 gegenüberliegenden Begrenzungen der Kanäle 3 bilden nicht eine Außenfläche Kühlkörpers 1, sondern sind durch ein Luftpolster 7 von einer äußeren Fläche des Kühlkörpers 1 getrennt, nämlich der Schutzfläche 5. Die Schutzfläche 5 bildet die der Kühlfläche 4 gegenüberliegende Begrenzung des Batteriekühlkörpers 1 und ist mit der Kühlfläche 4 ausschließlich über Stege 6 verbunden. Die Stege 6 sind ausschließlich in Bereichen des Kühlkörpers 1 ausgebildet, in denen keine Kanäle 3 ausgebildet sind. Im dargestellten Beispiel bilden die Stege 6 jeweils die Seitenwände des Kühlkörpers 1. Stege 6 könnten aber auch im Inneren eines Kühlkörpers 1 ausgebildet sein, wie dies beispielsweise gegeben wäre wenn der in Fig. 1 dargestellte Kühlkörper 1 seitlich, an einem Steg 6, verdoppelt wird und somit Kühlflächen 4 für zwei Reihen von Batteriezellen 2 zur Verfügung stellen würde.

Die Stege 6 liegen seitlich neben den Kanälen 3, von den Kanälen 3 durch das selbe Luftpolster 7 beabstandet, dass die Kanäle 3 auch von der Schutzfläche 5 trennt.

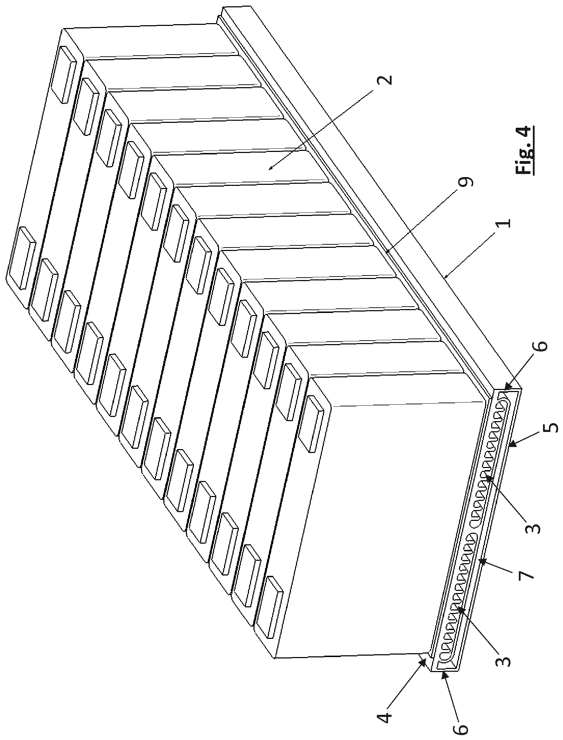

Wie in Fig. 3 und 4 dargestellt, können in einem erfindungsgemäßen Batteriesystem eine Vielzahl von Batteriezellen 2 in einer Reihe angeordnet an der von der Schutzfläche 5 abgewandten Seite der Kühlfläche 4 angeordnet sein. Dabei können jeweils die Böden oder auch seitliche Wände der Batteriezellen 2 in thermischem Kontakt mit der Kühlfläche 4 sein.

Die Batteriezellen 2 sind lediglich in Bereichen des Kühlkörpers 1 angeordnet, in welchen die Kanäle 3 ausgebildet sind, nämlich direkt über den Kanälen 3. In Bereichen des Kühlkörpers 1, in welchen die Stege 6 ausgebildet sind und keine Kanäle 3 liegen, das ist im dargestellten Beispiel seitlich am Batteriekühlkörper 1, sind keine Batteriezellen 2 angeordnet, so dass der Kühlkörper 1 breiter ausgebildet ist, als die Batteriezellen 2.

Zwischen den Batteriezellen 2 und der Kühlfläche 4 ist ein Material mit hohem Wärmeübergangskoeffizient 9 angeordnet, nämlich eine wärmeleitende Matte.

### Bezugszeichenliste

- 1: Batteriekühlkörper
- 2: Batteriezellen
- 3: Kanal
- 4: Kühlfläche
- 5: Schutzfläche
- 6: Steg
- 7: Luftpolster
- 8: Rippen
- 9: Material mit hohem Wärmeübergangskoeffizient

## Patentansprüche

1. Batteriekühlkörper (1), zur Kühlung von Batteriezellen (2) einer Fahrzeugbatterie, wobei der Batteriekühlköper (1) plattenförmig ist und innenliegende Kanäle (3) zur Führung eines Kühlfluids aufweist, wobei die Kanäle (3) gut wärmeleitend mit einer Kühlfläche (4) des Batteriekühlkörpers (1) in Verbindung stehen, wobei an der Kühlfläche (4) im verbauten Zustand des Batteriekühlkörpers (1) die Batteriezellen (2) angeordnet werden können und wobei der Batteriekühlkörper (1) eine Schutzfläche (5) aufweist, wobei die Schutzfläche (5) die der Kühlfläche (4) gegenüberliegende Begrenzung des Batteriekühlkörpers (1) bildet, wobei die Schutzfläche (5) mit der Kühlfläche (4) ausschließlich über Stege (6) verbunden ist, wobei die Stege (6) ausschließlich in Bereichen des Batteriekühlkörpers (1) ausgebildet sind, in denen keine Kanäle (3) ausgebildet sind,
wobei
die Stege (6) seitlich neben den Kanälen (3) angeordnet und von den Kanälen (3) durch das selbe Luftpolster (7) beabstandet sind, welches die Kanäle (3) auch von der Schutzfläche (5) trennt,
und wobei die der Kühlfläche (4) gegenüberliegenden Begrenzungen der Kanäle (3) nicht eine Außenfläche des Batteriekühlkörpers (1) bilden, sondern durch ein Luftpolster (7) von einer äußeren Fläche des Batteriekühlkörpers (1), der Schutzfläche (5), getrennt sind und der Batteriekühlkörper (1) mit seinen Komponenten Kanäle (3), Stege (6)und Schutzfläche (5) einstückig mit der Kühlfläche (4) ausgebildet ist.

2. Batteriekühlkörper nach Anspruch 1,
**dadurch gekennzeichnet, dass** die Kanäle (3) einen flachen Querschnitt aufweisen, deren Länge sich unterhalb der Kühlfläche (4) erstreckt, insbesondere einen ovalen oder rechteckigen Querschnitt.

3. Batteriekühlkörper nach zumindest einem der vorhergehenden Ansprüche,
**dadurch gekennzeichnet, dass** Abschnitte der Begrenzungen der Kanäle (3) von der Kühlfläche (4) gebildet werden.

4. Batteriekühlkörper nach zumindest einem der vorhergehenden Ansprüche,
**dadurch gekennzeichnet, dass** die Kühlfläche (4) dicker ausgebildet ist, als Abschnitte der Begrenzungen der Kanäle (3) die der Schutzfläche (5) zugewandt sind.

5. Batteriekühlkörper nach zumindest einem der vorhergehenden Ansprüche,
**dadurch gekennzeichnet, dass** in Abschnitten der Begrenzungen der Kanäle (3) die von der Kühlfläche (4) gebildet werden und/oder die der Kühlfläche (4) zugewandt sind, ins Innere der Kanäle (3) weisende Rippen (8) ausgebildet sind.

6. Batteriekühlkörper nach zumindest einem der vorhergehenden Ansprüche,
**dadurch gekennzeichnet, dass** der Batteriekühlkörper (1) aus Aluminium und/oder als Strangpressprofil ausgebildet ist.

7. Batteriesystem umfassend Batteriezellen (2) und einen Batteriekühlkörper (1) nach zumindest einem der vorhergehenden Ansprüche,
**dadurch gekennzeichnet, dass** die Batteriezellen (2) an der von der Schutzfläche (5) abgewandten Seite der Kühlfläche (4) angeordnet sind.

8. Batteriesystem nach Anspruch 7,
**dadurch gekennzeichnet, dass** die Batteriezellen (2) lediglich in Bereichen des Kühlkörpers (1) angeordnet sind in welchen die Kanäle (3) ausgebildet sind und nicht in Bereichen des Kühlkörpers (1), in welchen die Stege (6) ausgebildet sind.

9. Batteriesystem nach zumindest einem der Ansprüche 7 oder 8, **dadurch gekennzeichnet, dass** zwischen den Batteriezellen (2) und der Kühlfläche (4) ein Material mit hohem Wärmeübergangskoeffizient (9) angeordnet ist, insbesondere eine Matte oder Folie.

## Claims

1. A battery cooling body (1) for cooling battery cells (2) of a vehicle battery, wherein the battery cooling body (1) is plate-shaped and has internal channels (3) for guiding a cooling fluid, wherein the channels (3) are in good heat-conducting communication with a cooling surface (4) of the battery cooling body (1), wherein the battery cells (2) can be arranged on the cooling surface (4) in the installed state of the battery cooling body (1), and wherein the battery cooling body (1) has a protective surface (5), wherein the protective surface (5) forms the delimitation of the battery cooling body (1) which is opposite the cooling surface (4), wherein the protective surface (5) is connected to the cooling surface (4) exclusively via webs (6), wherein the webs (6) are formed exclusively in regions of the battery cooling body (1) in which no channels (3) are formed,
wherein
the webs (6) are arranged laterally adjacent to the channels (3) and are spaced from the channels (3) by the same air cushion (7) which also separates the channels (3) from the protective surface (5), and wherein the delimitations of the channels (3) which are opposite the cooling surface (4) do not form an outer surface of the battery cooling body (1) but are separated from an outer surface of the battery cooling body (1), the protective surface (5), by an air cushion (7), and the battery cooling body (1) with its component channels (3), webs (6) and protective surface (5) is formed in one piece with the cooling surface (4).

2. The battery cooling body according to Claim 1, **characterised in that** the channels (3) have a flat cross-section whereof the length extends below the cooling surface (4), in particular an oval or rectangular cross-section.

3. The battery cooling body according to at least one of the preceding claims,
**characterised in that** portions of the delimitations of the channels (3) are formed by the cooling surface (4).

4. The battery cooling body according to at least one of the preceding claims,
**characterised in that** the cooling surface (4) is formed to be thicker than portions of the delimitations of the channels (3) which face the protective surface (5).

5. The battery cooling body according to at least one of the preceding claims,
**characterised in that** ribs (8) pointing inside the channels (3) are formed in portions of the delimitations of the channels (3) which are formed by the cooling surface (4) and/or which face the cooling surface (4).

6. The battery cooling body according to at least one of the preceding claims,
**characterised in that** the battery cooling body (1) is formed from aluminium and/or as an extruded profile.

7. A battery system comprising battery cells (2) and a battery cooling body (1) according to at least one of the preceding claims,
**characterised in that** the battery cells (2) are arranged on the side of the cooling surface (4) which faces away from the protective surface (5).

8. The battery system according to Claim 7,
**characterized in that** the battery cells (2) are only arranged in regions of the cooling body (1) in which the channels (3) are formed and not in regions of the cooling body (1) in which the webs (6) are formed.

9. The battery system according to at least one of Claims 7 or 8,
**characterised in that** a material having a high heat transfer coefficient (9), in particular a mat or film, is arranged between the battery cells (2) and the cooling surface (4).

## Revendications

1. Corps de refroidissement de batterie (1), destiné à refroidir des éléments de batterie (2) d'une batterie de véhicule, le corps de refroidissement de batterie (1) étant en forme de plaque et comprenant des canaux (3) situés à l'intérieur pour le guidage d'un fluide de refroidissement, les canaux (3) étant reliés à une surface de refroidissement (4) du corps de refroidissement de batterie (1) avec une conductivité thermique satisfaisante, les éléments de batterie (2) pouvant être agencés sur la surface de refroidissement (4) une fois le corps de refroidissement de batterie (1) monté et le corps de refroidissement de batterie (1) comprenant une surface de protection (5), la surface de protection (5) formant la délimitation du corps de refroidissement de batterie (1) opposée à la surface de refroidissement (4), la surface de protection (5) étant reliée à la surface de refroidissement (4) exclusivement par l'intermédiaire d'éléments jointifs (6), les éléments jointifs (6) étant formés exclusivement dans des zones du corps de refroidissement de batterie (1) dans lesquelles aucun canal (3) n'est formé,
dans lequel :
les éléments jointifs (6) sont agencés latéralement à côté des canaux (3) et espacés des canaux (3) par le même coussin d'air (7), lequel sépare également les canaux (3) de la surface de protection (5), et les délimitations des canaux (3) opposées à la surface de refroidissement (4) ne formant pas de surface extérieure du corps de refroidissement de batterie (1), mais étant séparées d'une surface extérieure du corps de refroidissement de batterie (1), de la surface de protection (5), par un coussin d'air (7), et le corps de refroidissement de batterie (1), y compris ses composants canaux (3), éléments jointifs (6) et surface de protection (5), étant réalisé d'une seule pièce avec la surface de refroidissement (4).

2. Corps de refroidissement de batterie selon la revendication 1, **caractérisé en ce que** les canaux (3) présentent une section transversale plate dont la longueur s'étend au-dessous de la surface de refroidissement (4), en particulier une section transversale ovale ou rectangulaire.

3. Corps de refroidissement de batterie selon au moins l'une des revendications précédentes, **caractérisé en ce que** des segments des délimitations des canaux (3) sont formés par la surface de refroidissement (4).

4. Corps de refroidissement de batterie selon au moins l'une des revendications précédentes, **caractérisé en ce que** la surface de refroidissement (4) est plus épaisse que les segments des délimitations des canaux (3) qui sont tournés vers la surface de protection (5).

5. Corps de refroidissement de batterie selon au moins l'une des revendications précédentes, **caractérisé en ce que** des nervures (8) orientées vers l'intérieur des canaux (3) sont réalisées dans des segments des délimitations des canaux (3) qui sont formés par la surface de refroidissement (4) et/ou qui sont tournés vers la surface de refroidissement (4).

6. Corps de refroidissement de batterie selon au moins l'une des revendications précédentes, le corps de refroidissement de batterie (1) étant **caractérisé en ce qu'**il est réalisé en aluminium et/ou sous la forme d'un profilé extrudé.

7. Système de batterie comprenant des éléments de batterie (2) et un corps de refroidissement de batterie (1) selon au moins l'une des revendications précédentes, **caractérisé en ce que** les éléments de batterie (2) sont agencés sur la face de la surface de refroidissement (4) opposée à la surface de protection (5).

8. Système de batterie selon la revendication 7, **caractérisé en ce que** les éléments de batterie (2) sont agencés uniquement dans des zones du corps de refroidissement (1) dans lesquelles les canaux (3) sont formés et pas dans des zones du corps de refroidissement (1) dans lesquelles les éléments jointifs (6) sont réalisés.

9. Système de batterie selon l'une quelconque des revendications 7 ou 8, **caractérisé en ce qu'**un matériau présentant un coefficient de transmission thermique (9) élevé, en particulier un mat ou une feuille, est agencé entre les éléments de batterie (2) et la surface de refroidissement (4).
